# EUROPEAN PATENT SPECIFICATION

(11) **EP 2 598 300 B1**
(45) Date of publication and mention of the grant of the patent: **25.11.2015**
(21) Application number: 11748717.3
(22) Date of filing: 22.06.2011
(51) Int. Cl.: B29B 7/18, B29B 7/24, F15B 15/24, F15B 15/22

(54) **APPARATUS FOR PRODUCING ELASTOMERIC COMPOUNDS**
VORRICHTUNG ZUR HERSTELLUNG VON ELASTOMERMISCHUNGEN
APPAREIL POUR LA PRODUCTION DE MÉLANGES ÉLASTOMÈRES

(30) Priority: 04.08.2010 US 370702 P; 30.07.2010 IT MI20101439
(43) Date of publication of application: 05.06.2013
(73) Proprietor: Pirelli Tyre S.p.A., 20126 Milano (IT)
(72) Inventor: BOTTOMLEY, Alan, Carlisle Cumbria CA2 6 (GB); PESSINA, Roberto, I-20126 Milan (IT); GOODING, Andrew, Burton-on-Trent Staffordshire DE13 0BH (GB); PATTERSON, Mike, Carlisle Cumbria CA2 6 (GB)
(74) Representative: Vittorangeli, Lucia
(86) International application number: PCT/IB2011/052737
(87) International publication number: WO 2012/014097

(56) References cited:
- EP-A1- 0 403 160
- EP-A1- 0 845 339
- EP-A1- 1 236 504
- EP-A2- 1 747 868
- DE-A1- 2 340 555
- DE-A1- 3 502 615
- DE-U1- 9 101 269
- FR-A1- 2 848 268
- JP-A- 60 189 405
- US-A- 4 830 506

## Description

### FIELD OF THE INVENTION

The present invention relates to an apparatus for producing elastomeric compounds.

In greater detail, the present invention relates to an apparatus in which at least one elastomeric compound used in manufacturing one or more structural elements of the tyre is produced by at least one mixing step.

The mixing processing consists in mixing a polymeric base together with other ingredients according to predetermined formulations, for obtaining semifinished products to be used in the subsequent steps of the tyre production cycle. This processing is typically carried out with continuous or discontinuous mixers.

The continuous mixers substantially comprise a cylindrical chamber inside which a worm screw (hereinafter referred to as rotor) or double screw rotates, for carrying the material being processed from one end of said chamber to the other, in a continuous manner: mixing of the material takes place on the way inside the cylindrical chamber.

The discontinuous (closed) mixers substantially comprise a mixing chamber containing a pair of rotors rotating in opposite ways relative to each other: the material is processed in predetermined discrete amounts (batches) that are completely unloaded from the mixer at the processing end before starting processing of a new batch.

Examples of mixers and compound processing for tyre production are provided in EP1236504 and WO00/59699 in the name of the same Applicant.

US 4 830 506 discloses a batch mixer having position monitoring means for the ram operably coupled to the ram moving motor to move the ram within a range of positions adjacent the ram's "down" position to improve mixing by allowing limited upward movement of the ram as a result of internal pressures inside the mixer.

Said US 4 830 506 discloses an apparatus according to the preamble of claim 1.

### SUMMARY OF THE INVENTION

The present invention relates to discontinuous mixers and among them to mixers commonly known as "Banbury^{®}" or "Intermix^{®}".

Within the context of the present specification by the term "compound" it is indicated both a generic intermediate material obtained during any step of the processing cycle and a semifinished product resulting from addition of the cross-linking system to an intermediate material, to make it ready for subsequent curing.

The Applicant has found that the physico-chemical features of the compounds enabling obtaining of a semifinished product, a green tyre, and ultimately a cured tyre having the desired qualities, depend on the processing in closed mixers. For this reason, control of this operating step takes an indispensable role in the production of tyres and components thereof. The Applicant has ascertained that there are many variables affecting the working process in closed mixers. Examples of these process variables are the features of the ingredients used for the compounds and the sequence at which they are introduced into the mixer, temperature variations in the processed compounds, pressure of the pressure piston in the closed mixer, torque and speed of the rotor or rotors, mixing time and energy, mixer's filling level (the so-called "Fill Factor"), to mention only some of them.

From a practical point of view, the process parameters can be divided into direct and indirect parameters, which means that the first ones are those on which the control system of the mixer acts for making the second ones vary: for instance, pressure of the pressure piston and speed of the rotors can be increased or decreased to cause variation in the temperature and/or the energy taken up by the compound.

The Applicant has observed that by acting on such process parameters it is possible to obtain an improvement in the compound features that has repercussions on the final features of the tyre, sometimes however to the detriment of productivity of the semifinished products and, as a result, of the tyres. Sometimes, in fact, this feature improvement is the consequence of higher mixing times involving a reduced productivity.

The Applicant has observed that the lower end-of-stroke position of the pressure piston, in the following referred to as JP, can be used as further direct parameter and therefore control parameter of the process.

In fact, by acting on the lower end-of-stroke position, JP, the inner mixing volume of the mixer at the compounds' disposal is modified.

The Applicant has observed that by adjusting the lower end-of-stroke position, JP, of the pressure piston it is possible to improve the features belonging to the compounds (number and sizes of the aggregates, elasticity, viscosity), the process parameters that are wished to be obtained (mixing times and unloading temperatures, for example) and the desired performance of the cured tyre.

The Applicant has found that a variation even of few millimetres in the lower end-of-stroke position of the pressure piston can produce a surprising qualitative-improvement effect of the compound and the cured product, thus enabling tyres having the best performance features to be obtained.

The Applicant has further found that these qualitative improvements of the compound can be obtained, while maintaining or in some cases even increasing the system productivity.

The Applicant, through control of the end-of-stroke position, JP, of the piston, has practically introduced a new direct parameter, or degree of freedom, enabling the indirect parameters of the system to be affected, such as for example supply of energy and heat generation of the compound, with important improvements of the static and dynamic compound properties, as well as of the tyre performances.

The Applicant has further understood that it is useful that in the same apparatus a number "r" of JP's be available for carrying out indexing as it is suitable for the compound, and possibly for varying the JP also during processing of a single compound, so as to optimise the mixing time, the viscoelastic features of the compound and mechanical features of the tyre obtained after moulding/curing of a green tyre assembled with at least one semifinished product obtained through said process, and/or the productivity of the plant.

The present invention relates to an apparatus for producing elastomeric compounds according to claim 1.

The adjusting device comprises an end-of-stroke plate integrally fastened to the mixer and provided with "r-1" end-of-stroke elements, each of them being movable irrespective of the others between a first position in which it lies in a retracted condition in the plate, and a second position, in which it emerges from said plate. In the "r" lower end-of-stroke positions, the plunger bears against an abutment surface of said end-of-stroke plate or against one of said "r-1" end-of-stroke elements.

The lower end-of-stroke positions to be used during a processing cycle can be preset before starting of the processing, based on the ingredients and the type of compound to be produced, for example. Once the cycle has been started, the apparatus is able to carry out variations of the lower end-of-stroke position in a self-governing manner.

The present invention, in at least one of the aforesaid aspects, can further have one or more of the preferred features hereinafter described.

Preferably, "m" is equal to or greater than two.

A single production cycle is made up of several steps during each of which the piston is moved downwards and two subsequent steps are separated by a raising and sudden lowering movement of the piston.

Preferably, "q" is equal to or greater than two.

Each of said selected "q" lower end-of-stroke positions is set in such a manner as to obtain the desired features of the compound being processed and/or properties of the cured compound.

Preferably, the features of the compound being processed are selected from the group comprising: Mooney viscosity ML(1+4), scorching time.

Preferably, the properties of the cured compound are selected from the group comprising: IHRD hardness, stress at break, elongation at break, predetermined tensile stress, strain energy, tear resistance, abrasion resistance, fatigue life, modulus of elasticity (E', G'), dissipative moduli (E'', G"), loss factor (tan delta).

Preferably, the difference between two selected "q" lower end-of-stroke positions which are contiguous does not exceed about 40 mm.

Preferably, the difference between two selected "q" lower end-of-stroke positions that are contiguous is at least as high as about 4 mm.

A difference even of a few centimetres, or even of few millimetres between the ends-of-strokes allows important effects to be obtained on the quality of the compound and the cured product, which effects positively affect the performance obtainable with tyres made of the elastomeric materials obtained on the basis of such compounds.

According to a preferred embodiment, the apparatus comprises an actuator cylinder mounted on the mixer, wherein the end-of-stroke plate is installed in the actuator cylinder.

Preferably, the actuator cylinder is of the hydraulic or pneumatic type and the end-of-stroke plate confines a chamber internal to said actuator cylinder at the lower part thereof.

The adjusting device according to the invention can be easily also obtained on known mixers with few structural modifications. In fact it is sufficient to replace the plate closing the known cylinders at the lower part thereof with an end-of-stroke plate, as described in the apparatus according to the invention.

Each of the "r-1" end-of-stroke elements has an annular shape and is disposed around the rod.

Preferably, the end-of-stroke plate has "r-1" annular seats, each in fluid connection with a source of fluid under pressure and each housing a respective end-of-stroke element.

This structure ensures that the rest surface of the plunger on the end-of-stroke element is wide enough to avoid generation of concentrated forces. The radial symmetry of the end-of-stroke element further ensures maintenance of the axial alignment of the piston and the rod in the cylinder, thus avoiding generation of undesirable friction forces and the occurrence of mulfunctions. In addition, this structure is simple and reliable.

Preferably, the "r-1" end-of-stroke elements emerge from the abutment surface by a distance not exceeding about 100 mm.

Preferably, in the second position the "r-1" end-of-stroke elements emerge from the abutment surface by a distance at least as long as about 4 mm.

Preferably, in the second position, a first one of the "r-1" end-of-stroke elements emerges from the abutment surface by a distance included between about 4 mm and about 20 mm.

Preferably, in the second position a second one of the "r-1" end-of-stroke elements emerges from the abutment surface by a distance included between about 8 mm and about 40 mm.

In a preferred embodiment, "r" is equal to three.

In a preferred embodiment, the apparatus comprises a control unit operatively connected to the adjusting device to make the pressure piston take different lower end-of-stroke positions in a single working cycle, during time periods shorter than the sum of the minimum up and down stroke times of said pressure piston.

Preferably, said control unit is operatively connected to the adjusting device to make the pressure piston take different lower end-of-stroke positions in a single processing cycle, during shorter periods of time than the minimum time of anyone of the up or down strokes of said pressure piston.

The end-of-stroke variation is so quick that different ends-of-strokes can be used on the same apparatus during a single processing cycle.

Processing of the compound can be divided into steps separated by time intervals during which the pressure piston is lifted and then lowered to the lower end-of-stroke position. The substantially complete raising of the pressure piston during mixing is typically made necessary to cause precipitation to the rotors of those portions of fillers that, possibly escaping mixing in the form of powders between the piston body and the wall of the mixing chamber, have been accumulated on the closing surface of the device. Thus the various percentages of the components of the compound are brought to the predetermined values again, which is an indispensable requirement for achievement of the final properties of the compound.

In addition, the operation of governing processing of the compound through the piston enables the temperature variation within the desired values to be controlled over time and allows the compound to be mixed again for correct formation of the final product.

In fact, raising of the piston, carried out for some instants reduces pressure on the material being processed and makes remixing easier; in addition, this raising controls a predetermined temperature gradient and at all events has the effect of maintaining this parameter within acceptable values so that the properties of the compound being processed are not jeopardised.

Further features and advantages will become more apparent from the detailed description of a preferred but not exclusive embodiment of a method and an apparatus in accordance with the present invention.

### BRIEF DESCRIPITON OF DRAWINGS

This description will be set out hereinafter with reference to the accompanying drawings, given by way of non-limiting example, in which:
- Fig. 1 shows a diagrammatic front view in section of a discontinuous mixer belonging to an apparatus for producing elastomeric compounds according to the present invention;
- Fig. 2 shows a first enlarged portion of the mixer in Fig. 1;
- Fig. 3 shows a second enlarged portion of the mixer in Fig. 1;
- Fig. 4 is a radial half-section of a tyre for vehicle wheels ;
- Figs. 5, 6 and 7 represent respective graphs relating to tests carried out with sample compounds processed with the different JP's.

With reference to the drawings, a discontinuous mixer belonging to an apparatus for producing elastomeric compounds according to the present invention has been generally identified by reference numeral 1.

Mixer 1 is of the so called "Banbury^{®}" type, and it comprises a pair of tangential powered rotors 2, 3 turning in opposite ways within a mixing chamber 4 cooled by the water circulating in a series of channels 5, 6.

Mixer 1 comprises a pressure piston 7 fastened to the end of a rod 8 driven by a pneumatic (or hydraulic) actuator cylinder 9.

Mixer 1 is further provided with a hopper 10 for introduction inside it of the material to be processed. Hopper 10 is in communication at the lower part thereof with a narrow duct or tube 11 opening into the mixing chamber 4 through a feeding opening 12 placed over rotors 2, 3. The pressure piston 7 runs inside the narrow duct 11 and is guided by it between a raised rest position and at least one lowered work position. In the raised position the piston clears the narrow duct 11 and enables introduction of the material to be processed into the mixing chamber 4 through the hopper 10, the narrow duct 11 and opening 12. In the lowered position, the pressure piston 7 compresses the compound contained in the mixing chamber 4.

Unloading of the processed compounds, on the contrary, takes place from below through an opening present at the bottom of the mixing chamber 4 closed by a closure member 13.

In mixer 1 the position of the pressure piston 7 and rod 8 operating it is detected in a manner known by itself by means of transducers, not shown in the drawings. This position can be detected along the whole stroke of the pressure piston, starting from its raised (rest) position at which it enables loading of the material through the hopper, to the lowered (work) position.

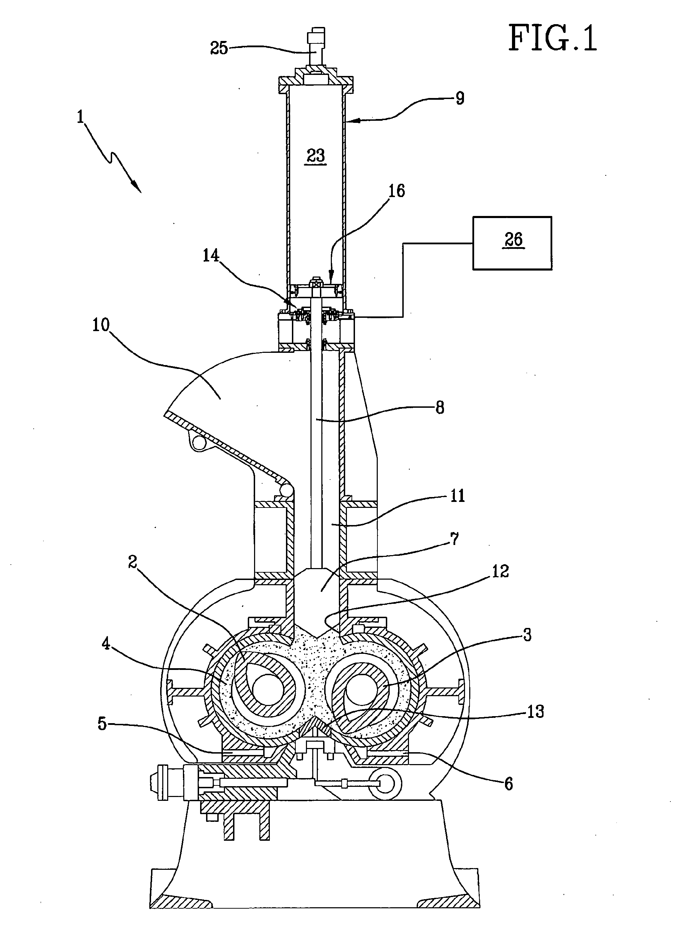

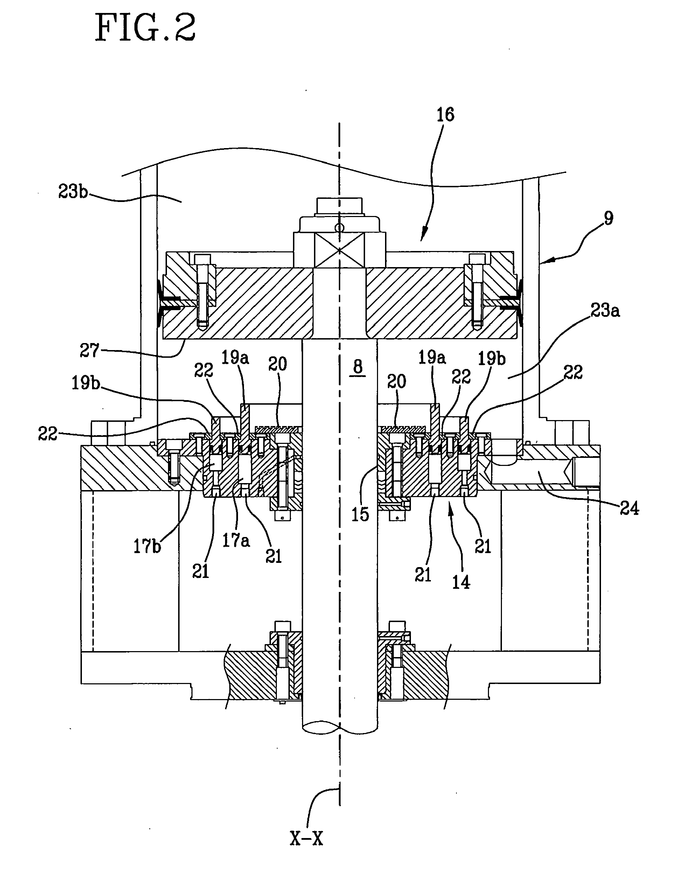

Mixer 1 comprises an end-of-stroke plate 14 installed in the actuator cylinder 9, integral with the cylinder 9 itself and provided with a hole 15 for passage and sliding of rod 8 (Figs. 1 and 2).

A plunger 16 is fastened to an opposite end of rod 8 relative to the pressure piston 7. Plunger 16 runs within the actuator cylinder 9 and is in contact with an inner wall of said cylinder 9.

The pressure piston 7 is movable downwards as far as at least a lower end-of-stroke position, at which plunger 16 comes into contact with the end-of-stroke plate 14, preventing further lowering of the pressure piston 7.

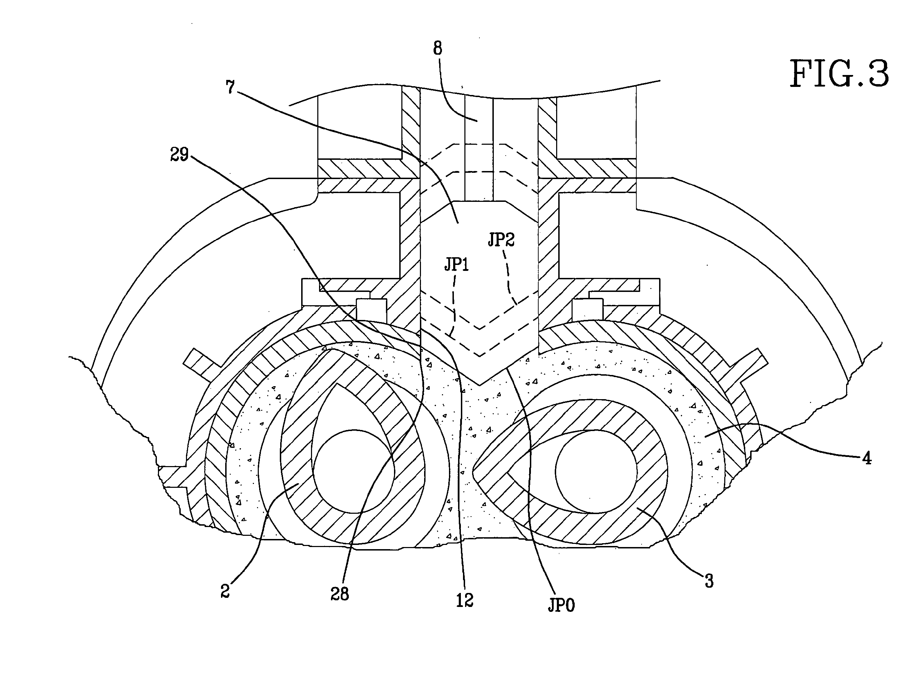

In the lower end-of-stroke position, the pressure piston 7 that has a tapering lower end, is partly inserted between the two rotors 2, 3 (without touching them), the tapering tip being placed over a tangent region of said rotors 2, 3 (Fig. 3).

The end-of-stroke plate 14 has annular furrows (in the embodiment shown in Fig. 2, two furrows are provided) that are concentric and coaxial with the longitudinal axis "X-X" of rod 8. The annular furrows 17a, 18a open on an upper surface 18 of plate 14. An end-of-stroke element 19a, 19b of annular shape is housed in each of furrows 17a, 17b. Each end-of-stroke element 19a, 19b is movable in the respective furrow 17a, 17b between a first and a second positions. In the first position, the end-of-stroke element 19a, 19b lies fully retracted in the end-of-stroke plate 14, without projecting beyond an abutment surface 20 disposed on the upper surface 18 of said plate 14. In the second position, shown in Fig. 2, the end-of-stroke element 19a, 19b is partly extracted from plate 14 and projects beyond said abutment surface 20.

Each furrow 17a, 17b is further in fluid communication through channels 21 with a source of fluid under pressure (not shown). The fluid under pressure (oil, for example), admitted in a controlled way into the furrows 17a, 17b pushes the end-of-stroke elements 19a, 19b to partly come out of the furrows 17a, 17b and to reach the respective second positions. Suitable retaining elements 22 prevent the end-of-stroke elements 19a, 19b from being ejected from plate 14. The fluid pressure together with the retaining elements 22 lock the end-of-stroke elements 19a, 19b in the respective second positions in a steady manner.

Each end-of-stroke element 19a, 19b at an upper end thereof has an annular locating surface designed to come into contact with plunger 16.

The end-of-stroke elements 19a, 19b, when they are in the second position, project from plate 14 by different lengths. In the embodiment shown, when the radially innermost annular end-of-stroke element 19a is disposed in the second position, it projects from plate 14 more than the radially innermost annular end-of-stroke element 19b which too is disposed in the second position.

Preferably, in its second position the radially innermost annular end-of-stroke element 19a projects relative to the abutment surface 20 by a distance of about 15 mm. Preferably, in its second position the radially outermost annular end-of-stroke element 19b projects relative to the abutment surface 20 by a distance of about 7 mm.

The end-of-stroke plate 14 provided with the end-of-stroke elements 19a, 19b defines an adjusting device operatively active on plunger 16 and adapted to vary the lower end-of-stroke position of piston 7, as better detailed in the following.

Plunger 16 sealingly divides an inner chamber 23 in the actuator cylinder 9 into a lower chamber 23a and an upper chamber 23b. The end-of-stroke plate 14 sealingly closes the inner chamber 23a of the actuator cylinder 9 at the lower part thereof and a first duct 24 is formed therein, said duct 24 opening into the lower chamber 23a and carrying the fluid adapted to move the pressure piston 7 from bottom to top. A second duct 25 brings the fluid into the upper chamber 23b and is used to move the pressure piston 7 from top to bottom.

In the non-limiting example shown and described, mixer 1 has three lower end-of-stroke positions for the pressure piston 7 that can be alternately set through a control unit 26 diagrammatically illustrated in Fig. 1.

A first lower end-of-stroke position (JP0) is obtained by bringing the end-of-stroke elements 19a, 19b to their first position, i.e. fully retracted in plate 14. The down stroke of the pressure piston 7 is stopped when a lower surface 27 of plunger 16 comes into contact with the abutment surface 20.

A second lower end-of-stroke position (JP1) is obtained by bringing the radially outermost end-of-stroke element 19b to the second position and leaving the radially innermost end-of-stroke element 19a in the first position. The down stroke of the pressure piston 7 is stopped when said lower surface 27 of plunger 16 comes into contact with the annular locating surface of the radially outermost end-of-stroke element 19a.

A third lower end-of-stroke position (JP2) is obtained by bringing the radially innermost end-of-stroke element 19a to the second position and leaving the radially outermost end-of-stroke element 19b in the first position. The down stroke of the pressure piston 7 is stopped when said lower surface 27 of plunger 16 comes into contact with the annular locating surface of the radially innermost end-of-stroke element 19b.

With reference to Fig. 3, when the first end-of-stroke position (JP0) is set, the pressure piston 7 reaches the lowered position that is the closest to rotors 2, 3. The end-of-stroke positions are preferably measured taking as the references the edge 28 of the feeding opening 12 through which the ingredients are sent from hopper 10 to the mixing chamber 4 and through which piston 7 passes, and the peripheral edge 29 of the piston 7 itself from which the tapering portion begins. When the second end-of-stroke position, JP1, is set, the edge 29 of piston 7 is disposed more above the edge 28 of the feeding opening as compared with JP0. When the third end-of-stroke position, JP2, is set, the edge 29 of piston 7 is disposed still more above the edge 29 of the feeding opening 12.

In use, mixing is divided into three steps during each of which the pressure piston 7 is maintained to the lower end-of-stroke position and these steps are separated from each other by an upward movement and sudden downward movement again of the pressure piston 7.

The end-of-stroke position of the pressure piston 7 in each of the steps is set *a priori* as further parameter of the processing for obtaining, through control of the indirect processing parameters, improvement in the features of the compound being processed, (Mooney viscosity ML(1+4), scorching time) and/or the properties of the cured compound (IHRD hardness, stress at break, elongation at break, predetermined tensile stress, strain energy, tear resistance, abrasion resistance, fatigue life, modulus of elasticity (E', G'), dissipative moduli (E'', G''), loss factor - tan delta) and advantageously also improvement in the performance of the tyre built on the semifinished products obtained by use of the aforesaid compounds. The lower end-of-stroke positions of the three steps can be equal to or different from each other. The possible end-of-stroke change between one step and the following one during a single processing cycle can be carried out manually by an operator acting on an appropriate command (not shown) or in an automatic manner by the control unit 26 suitably programmed, which unit controls the source of fluid under pressure in fluid communication, through channels 21, with the furrows 17a, 17b. Passage between the different lower end-of-stroke positions is quick enough to enable it to be carried out during the up and/or down movement of the pressure piston 7 between one step and the following one.

In order to select the lower end-of-stroke position or positions of the pressure piston 7 to be used in a production cycle (set *a priori*), it is preferable that first a series of mixing tests should be carried out, each with a single lower end-of-stroke position of the pressure piston 7 (predetermined JP) so as to subsequently evaluate the features of each process and each compound obtained, before and after curing.

For instance, it is possible to operate in the following way:
- selecting a compound to be produced in mixer 1;
- selecting "n" different lower end-of-stroke positions of the pressure piston 7 (in which "n" is equal to or greater than two);
- carrying out "n" mixing tests of said compound in the mixing chamber 4, in which each mixing test is carried out with one alone of the "n" end-of-stroke positions; wherein, during each of the "n" mixing tests, the pressure piston 7 is moved by "m" times from the raised position to the lower position and vice versa (where "m" is equal to or greater than two), wherein two raising movements in succession of the pressure piston 7 define a phase of the mixing text;

- detecting, for each mixing test and each phase of each mixing test, parameters of the processing and/or features of the compound being processed and/or detecting, for each mixing test, properties of the cured compound;
- selecting "p" reference end-of-stroke positions among the "n" end-of-stroke positions of the mixing tests as a function of the features and/or the parameters and/or the detected properties, in which "p" is at least equal to one;
- producing the compound in mixer 1 using the "p" reference end-of-stroke positions (where "p" could be only one for all phases of the production cycle or each phase of the production cycle could be carried out with an end-of-stroke position different from the others).

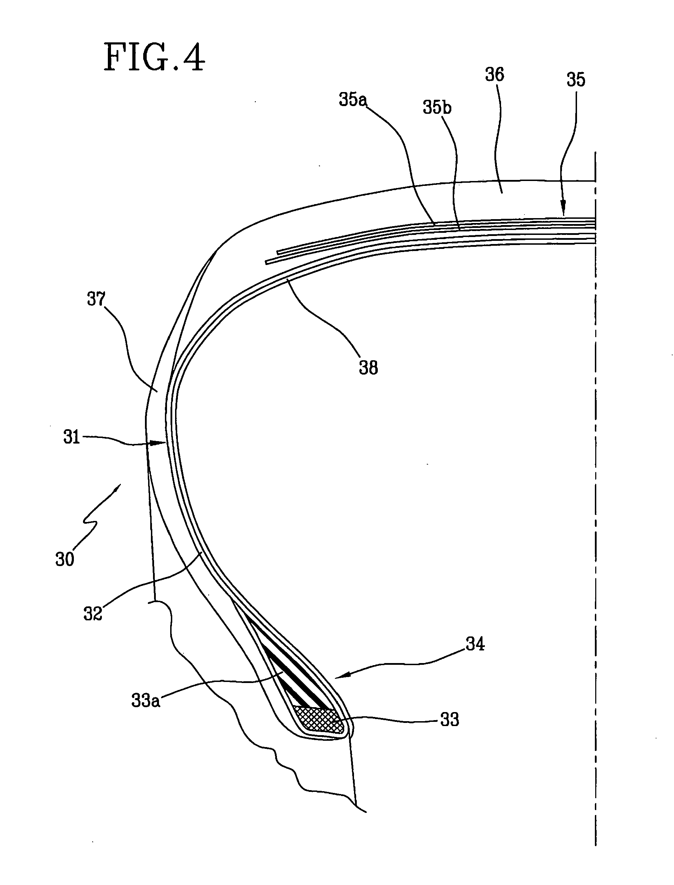

Identified with reference number 30 in Fig. 4 is a tyre for vehicle wheels produced following the method and the apparatus according to the invention. Tyre 30 generally comprises a carcass structure 31 including at least one carcass ply 32 having respectively opposite end flaps in engagement with respective annular anchoring structures 33, possibly associated with elastomeric fillers 33a, incorporated into the regions 34 usually identified as "beads". The carcass ply 32 comprises a plurality of textile or metallic reinforcing cords, disposed parallel to each other and at least partly coated with a layer of elastomeric material.

Associated with the carcass structure 31 is a belt structure 35 comprising one or more belt layers 35a, 35b placed in radial superposed relationship with each other and with the carcass ply 32 and having typically metallic reinforcing cords. These reinforcing cords can have a crossed orientation relative to the circumferential extension direction of tyre 30.

A tread band 36 made of an elastomeric compound like other semifinished products constituting tyre 30 is applied at a radially external position to the belt structure 35. The tread band 36 can be formed with two portions, a radially farther portion intended for contact with the road surface, and a radially more inward portion, or underlayer, that is disposed in contact with the belt structure 35.

In addition, respective sidewalls 37 made of elastomeric compound are applied at an axially external position onto the side surfaces of the carcass structure 31, each extending from one of the side edges of the tread band 36 until close to the respective annular anchoring structure 33 to the beads 34.

Furthermore, a radially internal surface of tyre 30 is preferably internally coated with a layer of airtight elastomeric material, or a so-called "liner" 38.

In the embodiment illustrated in Fig. 4, tyre 30 is of the type for motor-vehicles.

Typically, in this case the belt structure 31 further comprises at least one radially external layer including textile cords disposed at a substantially zero angle relative to the circumferential extension direction of tyre 30.

Tyre 30 can be of the type intended for use on heavy vehicles. By the expression "heavy vehicles" is understood as generally indicating a vehicle belonging to the categories M2∼M3, N1∼N3 and O2∼O3 as defined in "Consolidated Resolution of the Construction of Vehicles (R.E.3) (1997), Annex 7, pages 52-59, "Classification and definition of power-driven vehicles and trailers", such as trucks, lorries, tractors, coaches, vans and other vehicles of this type. The belt structure of a tyre for heavy vehicles (not shown) typically comprises a belt layer usually known as "gravel guard belt", which is the radially outermost layer of the belt structure and acts as a protection layer against penetration of stones and/or fine gravel into the innermost layers of the tyre structure.

Preferably, the belt structure of a tyre for heavy vehicles further comprises a reinforcing side strip that can be radially superimposed on the second belt layer, at an axial end thereof. The side strip incorporates a plurality of reinforcing elements, preferably high-elongation metal cords. Furthermore, preferably an insert is disposed substantially at the shoulder portion, i.e. the portion where the side end of the tread band joins the sidewall. In particular, the insert has a portion the is substantially interposed in the radial direction between the belt structure and the tread band and a portion that is substantially interposed in the axial direction between the carcass and the sidewall.

Tyre 30 can alternatively be for motorcycles. The cross-section profile of the tyre for motorcycles (not shown) has a high transverse curvature as it must ensure a sufficient footprint area in all inclination conditions of the motorcycle. The transverse curvature is defined by the value of the ratio between the distance f of the tread centre from the line passing through the laterally opposite ends E of the tread itself, measured on the equatorial plane of the tyre, and the width C defined by the distance between the laterally opposite ends E of the tread. By tyre having a high transverse curvature it is intended a tyre the transverse curvature ratio (f/C) of which is at least 0.20. Preferably, (f/C) is included between 0.20 and 0.5 for a rear tyre and between 0.35 and 0.6 for a front tyre, respectively.

Tyre 30 is made through assembly of respective semifinished products comprising one or more elastomeric compounds, each of which can be produced by mixer 1.

Subsequent to building of the green tyre, through assembly of the respective semifinished products, a curing and moulding treatment is generally carried out which aims at determining structural stabilisation of the tyre through cross-linking of the elastomeric compounds and at impressing the tread band, wound around the carcass before curing, with a desired tread pattern and stamping possible distinctive graphic marks at the sidewalls.

Typically, the compounds used in the present invention can comprise a polymeric base including at least one elastomeric diene polymer selected from those commonly used in elastomeric compositions that can be cross-linked with sulphur, which are particularly suitable for production of tyres, or from elastomeric polymers or copolymers with an unsaturated chain having a glass transition temperature (Tg) generally under 20°C, preferably in the range of 0°C to 110°C. These polymers or copolymers can be of natural origin or can be obtained by solution polymerisation, emulsion polymerisation or gas-phase polymerisation of one or more conjugated diolefins, optionally mixed with at least one comonomer selected from monovinylarens and/or polar comonomers.

The elastomeric polymer can be selected from the conjugated diolefins generally containing 4 to 12, preferably 4 to 8 carbon atoms, and can be selected, for example from the group comprising: 1,3-butadiene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-Butadiene is particularly preferred.

The monovinylarens that can be optionally used as comonomers generally contain 8 to 20, preferably 8 to 12 carbon atoms and can be for example selected from: styrene, 1-vinylnaphthalene, 2-vinylnaphthalene, several alkyl, cycloalkyl, aryl, alkylaryl or arylalkyl styrene derivatives such as, for example, a-metylstyrene, 3-methylstyrene, 4-propylstyrene, 4-cyclohexylstyrene, 4-dodecylstyrene, 2-ethyl-4-benzylstyrene, 4-p-tolylstyrene, 4-(4-fenylbutyl)styrene or mixtures thereof. Styrene is particularly preferred.

Polar comonomers that can be optionally used can be selected, for example, from: vinylpyridine, vinylquinoline, acrylic acid and alkylacrylic acid esters, nitriles or mixtures thereof such as methyl acrylate, ethyl acrylate, methyl metacrylate, ethyl metacrylate, acrylonitrile or mixtures thereof.

Preferably, the elastomeric diene polymer can be for example selected from: cis-1,4-polyisoprene (natural or synthetic rubber, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers or mixtures thereof.

The compound may optionally comprise at least one elastomeric polymer of one or more mono-olefins with an olefin comonomer or derivatives thereof. The mono-olefins can be selected from: ethylene and a-olefins generally containing 3 to 12 carbon atoms, such as, for example, propylene, 1-butene, 1-pentene, 1-hexene, 1-octene or mixtures thereof. The following are preferred: copolymers of ethylene and an a-olefin, optionally with a diene; isobutene homopolymers or copolymers thereof with reduced diene amounts that are optionally at least partly halogenated. The diene optionally present generally contains 4 to 20 carbon atoms and is preferably selected from: 1,3-butadiene, isoprene, 1,4-hexadiene, 1,4-cyclohexadiene, 5-ethylidine-2-norbornene, 5-methylene-2-norbornene, vinylnorbornene or mixtures thereof. Of these, in particular the following are preferred: ethylene-propylene copolymers (EPR) or ethylene-propylene-diene copolymers (EPDM); polyisobutene, butyl rubbers; halobutyl rubbers, in particular chlorobutyl or bromobutyl rubbers, or mixtures thereof.

The compound may optionally comprise at least one polyisoprene rubber and/or at least one elastomeric diene polymer that are made more efficient and effective for reactions with suitable termination agents or coupling agents.

At least one reinforcing filler can be advantageously added to the compound. The reinforcing filler can be selected from those commonly used for tyres, such as carbon black, silica, alumina, aluminosilicates, calcium carbonate, kaolin or mixtures thereof. Particularly preferred are carbon black, silica and mixtures thereof.

The compound can be cured following known techniques, in particular using sulphur-based curing systems, commonly used for the elastomeric polymers. The curing agent used in the most advantageous manner is sulphur or sulphur-containing molecules (sulphur donors), with curing promoters, accelerating agents and retarders known to those skilled in the art.

The curing promoters that are particularly efficient are zinc compounds and in particular ZnO, ZnCO3, saturated or unsaturated fatty acid zinc salts containing 8 to 18 carbon atoms such as zinc stearate, that are preferably formed *in situ* in the elastomeric composition from ZnO and fatty acids and also BiO, PbO, Pb3O4, PbO2 or mixtures thereof. The stearic acid is typically used as the promoter with zinc oxide.

Said compound may comprise other additives commonly used and selected based on the specific application.

For the purpose of further improving workability, a plasticizer, generally selected from mineral oils, vegetable oils, synthetic oils or mixtures thereof, such as paraffinic oils, aromatic oils, naphthenic oils, phthalates or mixtures thereof, can be added to the compound.

The compound may comprise other commonly used additives that are selected based on the specific application. For example, the following can be added to the compound: antioxidants, age resisters, plasticizers, adhesives, antiozonants (in particular, of the p-phenylenediamine), waxes, modifying resins, fibres or mixtures thereof.

### EXAMPLES

The Applicant has carried out tests for evaluating the influence of the lower end-of-stroke position of the pressure piston (JP) on the features of the obtained compound, the parameters of the mixing process, the mechanical properties of the cured item and the productivity increase.

Two tests have been carried out (test 1 and test 2) for each of the following three samples of compounds:
Sample 1 - natural-rubber compound comprising carbon black filler, used for building belts;
Sample 2 - styrene-butadiene rubber compound comprising silica and carbon black filler, used for building the tread;
Sample 3 - natural-rubber and butadiene rubber compound in a ratio of about 4:1 respectively, comprising carbon black filler, used for building the underlayer.

The tests have been carried out under the following conditions in a tangential mixer Banbury^{®} type F270 from POMINI.

| Compound | Test name | Compound mass | Fill Factor | End-of-stroke position |
|---|---|---|---|---|
| Sample 1 | Test 1 | 100 | 66% | JP-0 |
| | Test 2 | 105 | 67% | JP-1 |
| Sample 2 | Test 1 | 100 | 69% | JP-0 |
| | Test 2 | 105 | 69% | JP-1 |
| Sample 3 | Test 1 | 100 | 68% | JP-0 |
| | Test 2 | 105 | 69% | JP-1 |

The values of the compound masses are expressed in percentages, the values of tests 1 are indicated equal to 100 as reference and the values of tests 2 are referred to the values of tests 1.
By JP-0 the conventional lower end-of-stroke position of the pressure piston is indicated. By JP-1 it is indicated a second lower end-of-stroke position of the pressure piston that is raised relative to the JP-0 position by 25 mm.

The tests consisted in preparing compounds that were unloaded from the mixer on reaching a desired minimum unloading temperature.

On each of the green compound sample, measurements of the Mooney viscosity ML and the scorching time were carried out.

The Mooney viscosity ML (1+4) at 100°C was measured following the standard ISO 289-1:2005, on the material not cross-linked.

On the contrary, the scorching time was measured at 127°C following the standard ISO 289-2:1994.

Some samples were cured and the static mechanical properties and dynamic mechanical properties were detected.

The static mechanical properties (stress at break CR, elongation at break AR) were measured following the standard ISO 37:2005.

The dynamic mechanical properties were obtained using a Monsanto R.P.A. 2000 rheometer and adopting the following method: cylindrical test samples with weights in the range of 4.5 g to 5.5 g were obtained by punching from the cross-linked elastomeric composition of samples 1 - 3 (cured following the aforesaid conditions) and were submitted to measurement of the dynamic modulus of elasticity (G') and viscous modulus (G") at 70°C, frequency 10 Hz, deformation 0.4% and 10%. The delta tan value is calculated as the ratio of the viscous modulus (G'') to the modulus of elasticity (G').

Reproduced in the following table are the data concerning the two tests carried out (test 1 - test 2) related to the production process of the three sampled compounds (Sample 1, Sample 2, Sample 3).

| Compound | Test name | Mixing time (s) | Unloading temperature (°C) | Unloading energy (kWh) |
|---|---|---|---|---|
| Sample 1 | Test 1 | 182 | 97 | 5.33 |
| | Test 2 | 191 | 95 | 5.43 |
| Sample 2 | Test 1 | 110 | 101 | 6.40 |
| | Test 2 | 114 | 100 | 6.40 |
| Sample 3 | Test 1 | 104 | 105 | 5.40 |
| | Test 2 | 102 | 103 | 5.53 |

As to the process features, it is pointed out that for reaching the pre-set minimum unloading temperature of the mixer for the compound of Sample 1, the modification of the piston end-of-stroke (from the position identified as JP-0 to the position identified as JP-1) and increase in the processed material cause an increase in the mixing time. The same behaviour was not observed for the compounds of Samples 2 and 3 where the average mixing time remained substantially the same.

The Applicant has further observed that the modification of the piston end-of-stroke (from the position identified as JP-0 to that identified as JP-1) has determined a reduction in the unloading temperature for the more elastic compounds (Sample 1 and Sample 3) while for the more viscous compound (Sample 2), the temperature remained unchanged. The more elastic compound (Sample 1), has shown the most apparent difference in terms of heat generation in the individual mixing steps. In addition, for the tests carried out in the end-of-stroke position JP-1 and with a greater amount of processed material, the temperatures in the first step appeared to be similar to those of the processing operations carried out in the end-of-stroke position JP-0 and lower than the latter in the second step.

Reproduced in the following table are the data relating to the results of tests for evaluation of the static and dynamic features of the three sampled compounds processed with the different JP's.

For comparing the results, the values of the parameters are expressed in percentage, the values of tests 1 are denoted at 100 as the reference, and the values of tests 2 are referred to the values of tests 1.

### Sample 1 (belt compound)

| | Test 1 (FF 66%) | Test 2 (FF 67%) |
|---|---|---|
| ML (1+4) (MU) | 100 | 95.5 |
| G' (MPa) | 100 | 101.8 |
| TAN delta (G''/G') | 100 | 100.7 |
| CR (MPa) | 100 | 113.7 |
| AR (%) | 100 | 109.0 |
| Scorching (min) | 100 | 110.9 |

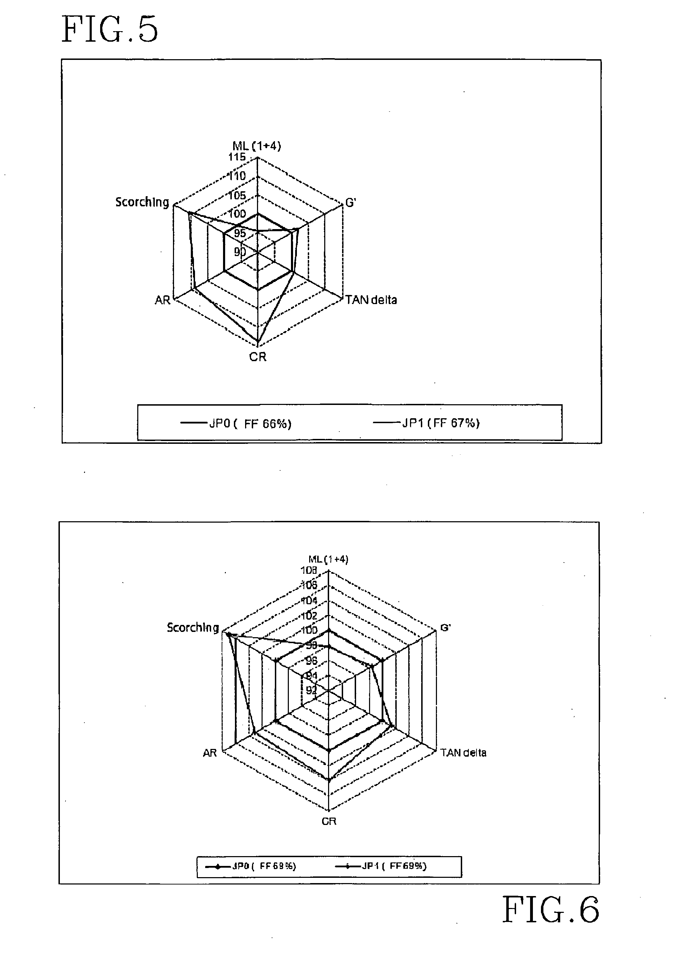

The parameters of the above table have been further graphically represented in the graph in Fig. 5.

### Sample 2 (tread compound)

| | Test 1 (FF 69%) | Test 2 (FF 69%) |
|---|---|---|
| ML (1+4) (MU) | 100 | 97.8 |
| G' (MPa) | 100 | 98.4 |
| TAN delta (G"/G') | 100 | 101.3 |
| CR (MPa) | 100 | 103.9 |
| AR (%) | 100 | 103.1 |
| Scorching (min) | 100 | 107.0 |

The parameters of the above table have been further graphically represented in the graph in Fig. 6.

### Sample 3 (underlayer compound)

| | Test 1 (FF 68%) | Test 2 (FF 69%) |
|---|---|---|
| ML (1+4) (MU) | 100 | 102.8 |
| G' (MPa) | 100 | 97.5 |
| TAN delta (G"/G') | 100 | 102.7 |
| CR (MPa) | 100 | 102.8 |
| AR (%) | 100 | 102.6 |
| Scorching (min) | 100 | 110.4 |

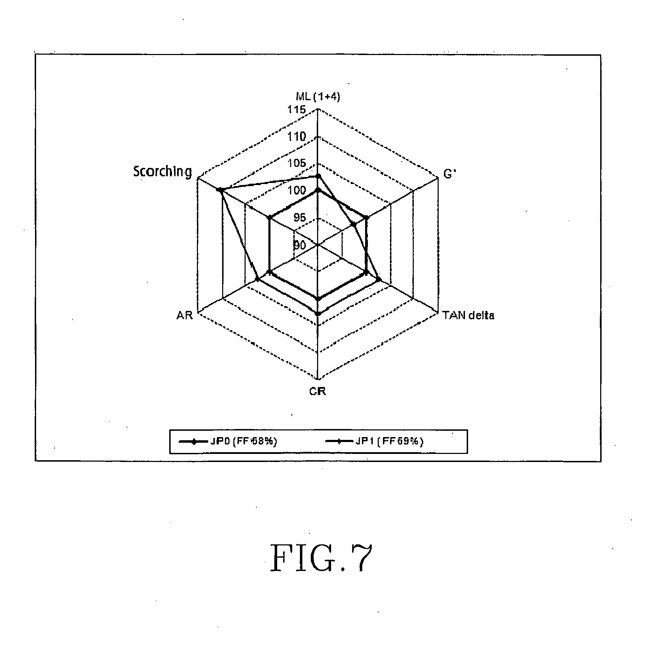

The parameters of the above table have been further graphically represented in the graph in Fig. 7.

From the "radar" graphs of Figs. 5, 6 and 7, obtained by reproducing the values of the parameters of the tests in the tables it is apparent that the variation in the JP has brought on the whole to an improvement of the features of the compound being processed and the static and dynamic mechanical properties of the cured compound samples.

In fact, in the radar graphs, although with slightly different morphologies, for each of the tested compounds it is possible to see an increase in the overall area of the polygons relating to the JP-1 end-of-stroke points as compared with the corresponding polygons relating to the JP-0 end-of-stroke points.

In other words, a further direct parameter for control of the mixing processing (JP) being available, it is possible to improve the desired features of the compounds and the cured product in order to obtain an improvement of the tyre performance and/or more productivity.

## Claims

1. An apparatus for producing elastomeric compounds, comprising:
- a mixer (1) having a mixing chamber (4) provided with a feeding opening (12);
- a pair of motor-driven rotors (2, 3) housed in the mixing chamber (4);
- a rod (8) supported by the mixer (1) and having a first end carrying a pressure piston (7) and a second end carrying a plunger (16);
the pressure piston (7) overhanging said rotors (2, 3) and being movable between a raised rest position and "r" lower end-of-stroke positions different from each other;
wherein "r" is equal to or greater than two;
wherein said apparatus comprises an adjusting device operatively acting on said plunger (16) for varying the lower end-of-stroke position of the pressure piston (7),
**characterized in that** said adjusting device comprises an end-of-stroke plate (14) integrally fastened to the mixer (1) and provided with "r-1" end-of-stroke elements (19a, 19b), each of them being movable irrespective of the others between a first position in which it lies in a retracted condition in the (end-of-stroke) plate (14), and a second position, in which it emerges from said (end-of-stroke) plate (14), and wherein each of the "r-1" end-of-stroke elements (19a, 19b) has an annular shape and is disposed around the rod (8).

2. An apparatus for producing elastomeric compounds as claimed in claim 1, wherein in the "r" lower end-of-stroke positions, the plunger (16) bears against an abutment surface (20) of said end-of-stroke plate (14) or against one of said "r-1" end-of-stroke elements (19a, 19b).

3. An apparatus as claimed in claim 1, comprising an actuator cylinder (9) mounted on the mixer (1), wherein the end-of-stroke plate (14) is installed in the actuator cylinder (9).

4. An apparatus as claimed in the preceding claim, wherein the actuator cylinder (9) is of the hydraulic or pneumatic type and the end-of-stroke plate (14) confines a chamber (23) internal to said actuator cylinder (9) at the lower part thereof.

5. An apparatus as claimed in the preceding claim, wherein the end-of-stroke plate (14) has "r-1" annular seats (17a, 17b), each in fluid communication with a source of fluid under pressure and housing a respective end-of-stroke element (19a, 19b).

6. An apparatus as claimed in claim 1, wherein in the second position the "r-1" end-of-stroke elements (19a, 19b) emerge from the abutment surface (20) by a distance not exceeding about 100 mm.

7. An apparatus as claimed in claim 1, wherein in the second position the "r-1" end-of-stroke elements (19a, 19b) emerge from the abutment surface (20) by a distance at least as long as about 4 mm.

8. An apparatus as claimed in claim 1, wherein in the second position a first one of the "r-1" end-of-stroke elements (19a, 19b) emerges from the abutment surface (20) by a distance included between about 4 mm and about 20 mm.

9. An apparatus as claimed in the preceding claim, wherein in the second position a second one of the "r-1" end-of-stroke elements (19a, 19b) emerges from the abutment surface (20) by a distance included between about 8 mm and about 40 mm.

10. An apparatus as claimed in claim 1, wherein "r" is equal to three.

11. An apparatus as claimed in claims 1 to 10, comprising a control unit (26) operatively connected to the adjusting device to make the pressure piston (7) take different lower end-of-stroke positions in a single processing cycle, during time periods shorter than the sum of the minimum up and down stroke times of said pressure piston (7).

12. An apparatus as claimed in claim 11, wherein said control unit (26) is operatively connected to the adjusting device to make the pressure piston (7) take different lower end-of-stroke positions in a single working cycle, during shorter periods of time than the minimum time of anyone of the up or down strokes of said pressure piston (7).

## Patentansprüche

1. Vorrichtung zur Herstellung von Elastomerkomponenten, wobei die Vorrichtung umfasst:
- einen Mischer (1) mit einer Mischkammer (4), die mit einer Zufuhröffnung (12) versehen ist;
- ein Paar motorbetriebener Rotoren (2, 3), die in der Mischkammer (4) untergebracht sind;
- eine Stange (8), die von dem Mischer (1) getragen wird und ein erstes Ende aufweist, das einen Druckkolben (7) trägt, sowie ein zweites Ende, das einen Stößel (16) trägt;
wobei der Druckkolben (7) über den Rotoren (2, 3) hängt und zwischen einer angehobenen Ruhestellung und "r" unteren Endanschlagsstellungen, die sich jeweils voneinander unterscheiden, bewegbar ist;
wobei "r" gleich oder größer als zwei ist;
wobei die Vorrichtung eine Einstelleinrichtung umfasst, die operativ auf den Stößel (16) wirkt, um die untere Endanschlagsstellung des Druckkolbens (7) zu variieren,
**dadurch gekennzeichnet, dass** die Einstelleinrichtung eine Endanschlagsplatte (14) umfasst, die einteilig mit dem Mischer (1) an diesem befestigt und mit "r-1" Endanschlagsselementen (19a, 19b) versehen ist, wobei jedes davon unabhängig von den anderen zwischen einer ersten Stellung, in der es in einem zurückgezogenen Zustand in der Endanschlagsplatte (14) ruht, und einer zweiten Stellung, in der es von der Endanschlagsplatte (14) wegragt, bewegbar ist, und wobei jedes der "r-1" Endanschlagselemente (19a, 19b) eine ringförmige Gestalt aufweist und um die Stange (8) herum angeordnet ist.

2. Vorrichtung zur Herstellung von Elastomerkomponenten nach Anspruch 1, wobei in den "r" unteren Endanschlagsstellungen der Stößel (16) gegen eine Anschlagsfläche (20) der Endanschlagsplatte (14) oder gegen eines der "r-1" Endanschlagselemente (19a, 19b) ruht.

3. Vorrichtung nach Anspruch 1, umfassend einen Stellzylinder (9), der an dem Mischer (1) montiert ist, wobei die Endanschlagsplatte (14) in dem Stellzylinder (9) installiert ist.

4. Vorrichtung nach dem vorhergehenden Anspruch, wobei der Stellzylinder (9) vom hydraulischen oder pneumatischen Typ ist, und die Endanschlagsplatte (14) eine Kammer (23) innerhalb des Stellzylinders (9), in einem unteren Teil desselben, begrenzt.

5. Vorrichtung nach dem vorhergehenden Anspruch, wobei die Endanschlagsplatte (14) "r-1" ringförmige Sitze (17a, 17b) aufweist, die jeweils in Fluidverbindung mit einer Quelle von unter Druck stehendem Fluid stehen und ein jeweiliges Endanschlagselement (19a, 19b) unterbringen.

6. Vorrichtung nach Anspruch 1, wobei in der zweiten Stellung die "r-1" Endanschlagselemente (19a, 19b) von der Anschlagsfläche (20) um einen Abstand wegragen, der etwa 100 mm nicht überschreitet.

7. Vorrichtung nach Anspruch 1, wobei in der zweiten Stellung die "r-1" Endanschlagselemente (19a, 19b) von der Anschlagsfläche (20) um einen Abstand wegragen, der mindestens etwa 4 mm beträgt.

8. Vorrichtung.nach Anspruch 1, wobei in der zweiten Stellung ein erstes der "r-1" Endanschlagselemente (19a, 19b) von der Anschlagsfläche (20) um einen Abstand wegragt, der zwischen etwa 4 mm und etwa 20 mm liegt.

9. Vorrichtung nach dem vorhergehenden Anspruch, wobei in der zweiten Stellung ein zweites der "r-1" Endanschlagselemente (19a, 19b) von der Anschlagsfläche (20) um einen Abstand wegragt, der zwischen etwa 8 mm und etwa 40 mm liegt.

10. Vorrichtung nach Anspruch 1, wobei "r" gleich drei ist.

11. Vorrichtung nach den Ansprüchen 1 bis 10, umfassend eine Steuereinheit (26), die mit der Einstelleinrichtung wirkverbunden ist, um den Druckkolben (7) unterschiedliche untere Endanschlagsstellungen in einem einzelnen Verarbeitungszyklus einnehmen zu lassen, während Zeitperioden, die kürzer sind als die Summe der minimalen Aufwärts- und Abwärtshubzeiten des Druckkolbens (7).

12. Vorrichtung nach Anspruch 11, wobei die Steuereinheit (26) mit der Einstelleinrichtung wirkverbunden ist, um den Druckkolben (7) unterschiedliche untere Endanschlagsstellungen in einem einzelnen Arbeitszyklus einnehmen zu lassen, während kürzerer Zeitperioden als die minimale Zeit für jeden der Aufwärts- oder Abwärtshübe des Druckkolbens (7).

## Revendications

1. Appareil pour produire des composés élastomères, comprenant :
- un mélangeur (1) ayant une chambre de mélange (4) munie d'une ouverture d'alimentation (12) ;
- une paire de rotors entraînés par un moteur (2, 3) logés dans la chambre de mélange (4) ;
- une tige (8) supportée par le mélangeur (1) et ayant une première extrémité portant un piston de pression (7) et une deuxième extrémité portant un piston plongeur (16) ;
le piston de pression (7) surplombant lesdits rotors (2, 3) et étant mobile entre une position haute de repos et "r" positions de fin de course inférieures différentes les unes des autres ;
où "r" est supérieur ou égal à deux ;
où ledit appareil comprend un dispositif de réglage agissant de manière fonctionnelle sur ledit piston plongeur (16) pour faire varier la position de fin de course inférieure du piston de pression (7), **caractérisé en ce que** ledit dispositif de réglage comprend une plaque de fin de course (14) fixée en une seule pièce au mélangeur (1) et munie de "r-1" éléments de fin de course (19a, 19b), chacun d'entre eux étant mobile indépendamment des autres entre une première position dans laquelle il repose dans un état rétracté dans la plaque de fin de course (14), et une deuxième position dans laquelle il émerge de ladite plaque de fin de course (14), et où chacun des "r-1" éléments de fin de course (19a, 19b) a une forme annulaire et est disposé autour de la tige (8).

2. Appareil pour produire des composés élastomères tel que revendiqué dans la revendication 1, dans lequel dans les "r" positions de fin de course inférieures, le piston plongeur (16) s'appuie contre une surface de butée (20) de ladite plaque de fin de course (14) ou contre l'un desdits "r-1" éléments de fin de course (19a, 19b).

3. Appareil tel que revendiqué dans la revendication 1, comprenant un cylindre d'actionnement (9) monté sur le mélangeur (1), où la plaque de fin de course (14) est installée dans le cylindre d'actionnement (9).

4. Appareil tel que revendiqué dans la revendication précédente, dans lequel le cylindre d'actionnement (9) est du type hydraulique ou pneumatique et la plaque de fin de course (14) confine une chambre (23) interne audit cylindre d'actionnement (9) au niveau de la partie inférieure de celui-ci.

5. Appareil tel que revendiqué dans la revendication précédente, dans lequel la plaque de fin de course (14) a "r-1" sièges annulaires (17a, 17b), chacun en communication fluidique avec une source de fluide sous pression et logeant un élément de fin de course (19a, 19b) respectif.

6. Appareil tel que revendiqué dans la revendication 1, dans lequel, dans la deuxième position, les "r-1" éléments de fin de course (19a, 19b) émergent de la surface de butée (20) par une distance ne dépassant pas environ 100 mm.

7. Appareil tel que revendiqué dans la revendication 1, dans lequel, dans la deuxième position, les "r-1" éléments de fin de course (19a, 19b) émergent de la surface de butée (20) par une distance au moins égale à environ 4 mm.

8. Appareil tel que revendiqué dans la revendication 1, dans lequel, dans la deuxième position, un premier élément parmi les "r-1" éléments de fin de course (19a, 19b) émerge de la surface de butée (20) par une distance incluse entre environ 4 mm et environ 20 mm.

9. Appareil tel que revendiqué dans la revendication précédente, dans lequel, dans la deuxième position, un deuxième élément parmi les "r-1" éléments de fin de course (19a, 19b) émerge de la surface de butée (20) par une distance incluse entre environ 8 mm et environ 40 mm.

10. Appareil tel que revendiqué dans la revendication 1, dans lequel "r" est égal à trois.

11. Appareil tel que revendiqué dans les revendications 1 à 10, comprenant une unité de commande (26) reliée de manière fonctionnelle au dispositif de réglage pour amener le piston de pression (7) à prendre des positions de fin de course inférieures différentes dans un cycle de traitement unique, durant des durées plus courtes que la somme du minimum des temps de course vers le haut et vers le bas dudit piston de pression (7).

12. Appareil tel que revendiqué dans la revendication 11, dans lequel ladite unité de commande (26) est reliée de manière fonctionnelle au dispositif de réglage pour amener le piston de pression (7) à prendre des positions de fin de course inférieures différentes dans un cycle de travail unique, durant des durées plus courtes que le temps minimal de l'une quelconque des courses vers le haut ou vers le bas dudit piston de pression (7).
